# EUROPÄISCHE PATENTSCHRIFT

(11) **EP 1 992 924 B1**
(45) Veröffentlichungstag und Bekanntmachung des Hinweises auf die Patenterteilung: **10.01.2018**
(21) Anmeldenummer: 08007988.2
(22) Anmeldetag: 25.04.2008
(51) Int. Cl.: G01G 17/02, G01G 13/08, G01G 19/393, B65B 1/32, B65B 1/36, B65B 37/18, G01G 15/00, A24C 5/39, B65B 1/34, B65G 43/08

(54) **Verfahren und Vorrichtung zur Bildung von Portionen aus faserigem Gut und zum Transport derselben**
Method and device for forming portions from fibrous material and for transporting said portions
Procédé et dispositif de formation de portions en matière fibreuse et de transport dedites portions

(30) Priorität: 18.05.2007 DE 102007023511
(43) Veröffentlichungstag der Anmeldung: 19.11.2008
(73) Patentinhaber: Focke & Co. (GmbH & Co. KG), 27283 Verden (DE)
(72) Erfinder: Jacobi, Tobias, 21423 Winsen/Luhe (DE); Ehlermann, Stefan, 21224 Rosengarten (DE); Geske, Hagen, 27356 Rotenburg (DE)
(74) Vertreter: Aulich, Martin

(56) Entgegenhaltungen:
- EP-A1- 0 099 980
- DE-A1-102004 063 057
- US-A- 1 425 251
- US-A- 4 720 961

## Beschreibung

Die Erfindung betrifft ein Verfahren zur Bildung von Portionen aus faserigem Gut, insbesondere Tabak, und zum Abtransport derselben durch einen (Endlos-)Förderer mit mindestens einer Bahn von Aufnahmen für je eine Portion, wobei die Aufnahmen an wenigstens zwei Befülllinien einer oder mehrerer Befüllungsstationen mit einzelnen Portionen des Füllgutes befüllt werden, und wobei vor den einzelnen Befüllvorgängen einzelne Portionen des Füllgutes abgewogen werden und abgewogene Portionen, die vorbestimmten Bedingungen entsprechen - Gutportionen -, taktweise in die Aufnahmen gefüllt werden und abgewogene Portionen, die den vorbestimmten Bedingungen nicht entsprechen, detektiert und als Fehlportionen ausgeschleust werden. Die Erfindung betrifft des Weiteren eine Vorrichtung zur Durchführung des Verfahrens.

Eine Vorrichtung, die nach einem derartigen Verfahren arbeitet, ist beispielsweise in der DE 33 16 176 A1 und der EP 0 099 980 A1 beschrieben. Dort werden einzelne Becher einer Becherkette an Befüllungsstationen mit Tabakportionen befüllt. Abhängig von der Geschwindigkeit der an der Befüllungsstation vorbei geförderten Becher der Becherkette erfolgen die einzelnen Befüllungsvorgänge in einem bestimmten Takt. Nachteilig bei der in der DE 33 16 176 A1 und der EP 0 099 980 A1 aufgezeigten Lösung ist, dass einzelne Becher der Becherkette leer bleiben können, falls mehrere abgewogene Portionen detektiert werden, die vorbestimmten Bedingungen nicht entsprechen, beispielsweise gegenüber einem vorbestimmten Soll-Gewicht ein Untergewicht oder ein Übergewicht aufweisen. Diese sogenannten Schlecht- oder Fehlportionen werden ausgeschleust und stehen zum Befüllen der Becher nicht zur Verfügung. Da die Becher weiterhin mit einer vorbestimmten Geschwindigkeit an der Befüllungsstation bzw. der entsprechenden Befüillinie der Befüllungsstation vorbeigeführt werden, bleiben einzelne Becher leer, falls zum vorgesehenen Befüllzeitpunkt die vorgesehene Befülllinie keine Gutportion zur Verfügung stellen kann.

Die US 1 425 251 A befasst sich ebenfalls mit der Portionierung von faserigem Gut. Es sind zwei Befülllinien gezeigt, die in Förderrichtung nacheinander einem Endlosförderer mit entsprechenden Aufnahmen bzw. Bechern zugeordnet sind. Kern der Offenbarung der D3 ist es, eine doppelte Befüllung einzelner Becher zu verhindern. Es soll also verhindert werden, dass zunächst die erste und anschließend die zweite Befülllinie ein und denselben Becher mit einer Portion befüllt. Die Befülllinien werden zu diesem Zweck mechanisch derart gekoppelt, dass die erste Befülllinie nur jeden zweiten Becher befüllen kann und die zweite Befülllinie nur die entsprechenden frei bleibenden Becher. Auch bei der US 1 425 251 A würden aber einzelne Becher leer bleiben, sollte einer Befülllinie keine geeignete Portion zur Befüllung des entsprechenden Bechers zur Verfügung stehen.

Die US 4 720 961 A zeigt. Grobmengen von Hühnchenteilen abzuwiegen und diesen Grobmengen dann bereits gewogene Feinmengen an Hühnchenteilen hinzuzufügen, bis die sich ergebende Gesamtmenge aus Grobmenge und Feinmenge vorbestimmten Bedingungen entspricht, nämlich einem vorbestimmten Sollgewicht. Die Hühnchenteile werden in geeignete, auf einem Endlosförderer angeordnete Verpackungen gefüllt. Einzelne Verpackungen können leer bleiben, falls beispielsweise in eine bestimmte Packung bleiben, fehlerhafterweise keine Grobmenge gefüllt wird.

Es ist Aufgabe der vorliegenden Erfindung, bei dem Verfahren der eingangs genannten Art das Auftreten von nicht gefüllten Aufnahmen, insbesondere Bechern, aufgrund von Fehlportionen zu reduzieren. Des Weiteren ist es Aufgabe der Erfindung, eine Vorrichtung anzugeben, die nach dem erfindungsgemäßen Verfahren arbeitet.

Diese Aufgabe wird gelöst durch ein Verfahren der eingangs genannten Art, das die Merkmale des Patentanspruches 1 aufweist sowie durch eine Vorrichtung mit den Merkmalen des Patentanspruches 11.

Danach wird ein (automatisches) Verfahren angegeben zur Bildung von Portionen aus faserigem Gut, vorzugsweise Tabak, und zum Abtransport derselben durch einen (Endlos-)Förderer mit mindestens einer Bahn von Aufnahmen für je eine Portion, wobei die Aufnahmen an wenigstens zwei Befüllungslinien einer oder mehrerer Befüllungsstationen mit einzelnen Portionen des Füllgutes befüllt werden, und wobei vor den einzelnen Befüllvorgängen einzelne Portionen des Füllgutes abgewogen werden und abgewogene Portionen, die vorbestimmten Bedingungen entsprechen - Gutportionen -, taktweise in die Aufnahmen gefüllt werden und abgewogene Portionen, die den vorbestimmten Bedingungen nicht entsprechen, detektiert und als Fehlportionen ausgeschleust werden, wobei das Verfahren gekennzeichnet ist durch folgende Schritte:
a) nach Detektion einer Fehlportion wird diejenige Aufnahme erfasst, die die ursprünglich zur Befüllung dieser Aufnahme vorbestimmte Befülllinie mit der Füllgutportion, auf der die Fehlportion basiert, befüllt hätte, hätte die Füllgutportion den vorbestimmten Bedingungen entsprochen - Fehlportionsaufnahme
b) eine andere als die ursprünglich für die Befüllung der Fehlportionsaufnahme vorbestimmte Befülllinie - Ausgleichsbefülllinie - befüllt die Fehlportionsaufnahme, vorzugsweise außerhalb deren ursprünglichen Befülltaktes, mit einer den vorbestimmten Bedingungen entsprechende Gutportion.

Erfindungsgemäß wird demnach in der Steuerung und/oder Regelung der Vorrichtung zur Bildung von Portionen aus faserigem Gut und zum Abtransport derselben diejenige Aufnahme erfasst, die von einer vorbestimmten Befülllinie hätte befüllt werden sollen, die aber nicht befüllt werden kann, da für diese Befülllinie keine Gutportion zur Verfügung steht, mit der diese (Fehlportions-)Aufnahme befüllt werden kann. Zumindest steht dieser Befülllinie eine entsprechende Gutportion nicht rechtzeitig zur Verfügung, d.h. nicht bis zu dem Zeitpunkt, zu dem die Fehlportionsaufnahme zur Befüllung derselben an die für die Befüllung notwendige Position relativ zur ursprünglich vorgesehenen Befülllinie befördert worden ist.

Die Position der so definierten Fehlportionsaufnahme in der Aufnahmebahn und/oder relativ zu den Befülllinien wird erfindungsgemäß vorzugsweise erfasst, indem die Position der Fehlportionsaufnahme innerhalb der Bahn von Aufnahmen und/oder relativ zu den Positionen der Befüllungslinien mittels geeigneter Steuerungs- und/oder Regelungsalgorithmen bestimmt, insbesondere berechnet wird, vorzugsweise unmittelbar nach Detektion der Fehlportion mittels einer Wägeeinrichtung

Die Position wird weiterverfolgt, während die Aufnahmen der Aufnahmebahn relativ zu den Befülllinien weitergefördert werden. Die Steuerung und/oder Regelung der Vorrichtung ermittelt eine andere Befülllinie derselben Befüllungsstation oder einer weiteren Befüllungsstation, die die von der ursprünglich vorbestimmten Befülllinie nicht befüllte Fehlportionsaufnahme befüllt. Diese Befülllinie, die für die ursprünglich vorbestimmte Befülllinie einspringt, wird im Folgenden Ausgleichsbefülllinie genannt.

Die Ausgleichsbefülllinie befüllt die Fehlportionsaufnahme vorzugsweise außerhalb ihres eigenen, ursprünglichen Befülltaktes. Mit anderen Worten befüllt sie die Fehlportionsaufnahme vor dem Ablauf derjenigen Zeitspanne, die taktgemäß zwischen zwei regulären Befüllvorgängen dieser Ausgleichsbefülllinie liegt. Dies ist möglich, wenn die Ausgleichsbefülllinie über eine gewisse Zeitreserve verfügt, d. h. wenn zwischen den taktgemäßen Befüllvorgängen ein weiterer Befüllvorgang vorgenommen werden kann kann.

Alternativ ist natürlich auch denkbar, dass eine Befülllinie eingesetzt wird, die keine oder in der Regel keine taktgemäßen Befüllvorgänge vornimmt, und daher bedarfsweise ausschließlich Fehlportionsaufnahmen befüllt.

In einer bevorzugten Ausführungsform befüllt die Ausgleichsbefülllinie die Fehlportionsaufnahme unmittelbar nach einer taktgemäßen, nämlich dem ursprünglichen Befülltakt (der Ausgleichsbefülllinie) entsprechenden Befüllung einer der Fehlportionsaufnahme in Förderrichtung des Förderers unmittelbar vorausgehenden Aufnahme durch die Ausgleichsbefülllinie. Die Ausgleichsbefülllinie befüllt in diesem Fall zwei in Förderrichtung hintereinander angeordnete, unmittelbar aufeinander folgende Aufnahmen.

Die Fehlportionsaufnahme kann von einer Ausgleichsbefülllinie befüllt werden, die in Förderrichtung stromabwärts der ursprünglich für die Befüllung der Aufnahme vorbestimmten Befülllinie angeordnet ist. Dies kann eine Befülllinie derselben Befüllstation sein oder eine Befülllinie einer weiteren Befüllstation.

Alternativ oder zusätzlich kann vorgesehen sein, dass die Fehlportionsaufnahme von einer Ausgleichsbefülllinie befüllt wird, die in Förderrichtung stromaufwärts der ursprünglich für die Befüllung der Aufnahme vorbestimmten Befülllinie angeordnet ist. Beispielsweise kann bereits eine Fehlportion detektiert werden, wenn sich die Fehlportionsaufnahme noch stromaufwärts einer Ausgleichsbefülllinie befindet, die wiederum ebenfalls stromaufwärts der ursprünglich für die Befüllung der Fehlportionsaufnahme angeordnet ist. Dann wird der stromaufwärts angeordneten Ausgleichsbefülllinie von der Steuerung und/oder Regelung mitgeteilt, dass eine Fehlportionsaufnahme befüllt werden muss, deren Befüllung von einer stromabwärts angeordneten Befülllinie nicht vorgenommen werden kann.

In einer weiteren Ausführungsform der Erfindung werden ein oder mehrere Gutportionen nach dem Abwiegen, allerdings vor der Befüllung einer Aufnahme durch eine der Befülllinien für eine bestimmte Zeitdauer in einem oder mehreren Speichern, insbesondere in einem Verteilerorgan, zwischengespeichert. Dies hat unter anderem den Vorteil, dass während der Speicherung bereits weitere Portionen abgewogen werden können, was die durchschnittlichen Mindestzeitabstände verringert, in denen Aufnahmen von der jeweiligen Befülllinie befüllt werden können.

In einer weiteren besonderen Ausführungsform befüllt eine einer ersten Bahn aus Aufnahmen zugeordnete Befülllinie die Aufnahmen dieser Aufnahmebahn taktgemäß und eine einer zweiten, vorzugsweise zur ersten Bahn parallelen, Aufnahmebahn zugeordnete Befülllinie dient als Ausgleichsbefülllinie dieser zweiten Aufnahmebahn, indem sie Fehlportionsaufnahmen dieser zweiten Bahn bei Bedarf befüllt, wobei die abgewogenen Gutportionen den beiden Befülllinien einzeln mittels eines gemeinsamen Verteilerorgans, insbesondere eines Verteilerrevolvers, zugeführt werden, das die abgewogenen Gutportionen bedarfsabhängig der einen oder der anderen Befülllinie zuführt.

Mit anderen Worten werden mindestens zwei Befülllinien über eine gemeinsame Zuführung Füllgutportionen zugeführt, wobei ein Verteilerorgan die Verteilung der Gutportionen auf die eine Befülllinie oder auf die andere Befülllinie, nämlich die Ausgleichsbefülllinie, vornimmt. Dabei werden der der ersten Aufnahmebahn zugeordneten Befülllinie die Gutportionen derart zugeführt, dass diese Befülllinie in einem vorbestimmten Befüllungstakt Befüllvorgänge ausführen kann. Die andere Befülllinie wiederum befüllt nur bei Bedarf einzelne Aufnahmen, nämlich dann, wenn diese Aufnahmen als Fehlportionsaufnahmen erfasst worden sind.

Vorzugsweise sind die vorgenannten Befülllinien mit gemeinsamer Zuführung bei parallelen Aufnahmebahnen auf einer quer zu den parallelen Aufnahmebahnen bzw. quer zur Förderrichtung des Förderers verlaufenden, gemeinsamen Linie angeordnet. Bezogen auf die Förderrichtung der Aufnahmen liegen dabei auch jeweils mindestens zwei Aufnahmen in senkrechter Richtung, d.h. quer zu den Aufnahmebahnen bzw. zur Förderrichtung, nebeneinander, sodass sie synchron, d.h. zeitgleich von den in senkrechter Richtung nebeneinander angeordneten Befülllinien befüllbar sind.

In weiterer Ausbildung dieser Ausführungsform wird eine möglicherweise durch die Ausgleichsbefüllung der Fehlportionsaufnahme der zweiten Bahn in der ersten Bahn bewirkte oder entstehende Aufnahme ohne Füllgut durch eine stromabwärts oder stromaufwärts angeordnete, weitere, der ersten Bahn zugeordnete Ausgleichsbefülllinie befüllt. Dies hat folgenden Hintergrund: Abhängig von der Geschwindigkeit, mit der Befülllinien mit gemeinsamer Zuführung Gutportionen zugeführt werden können, kann möglicherweise zwar die der zweiten Bahn zugeordnete Ausgleichsbefülllinie mit einer Gutportion versorgt werden, die andere taktgemäß arbeitende Befülllinie allerdings eventuell nicht. Nur einer der beiden Befülllinien mit gemeinsamer Zuführung, nämlich in diesem Fall der bedarfsweise befüllenden Ausgleichsbefülllinie kann eventuell demnach rechtzeitig eine Gutportion zur Verfügung gestellt werden. Die andere, taktgemäß arbeitende Befülllinie könnte in diesem Fall zum taktgemäß vorgesehen Zeitpunkt daher mangels zur Verfügung stehender Gutportion den taktgemäßen Befüllvorgang nicht ausführen. In diesem Fall würde naturgemäß in der entsprechenden ersten Bahn eine Aufnahme ohne Füllgutportion entstehen. Diese Aufnahme ohne Füllgutportion wird von der Steuerung erfasst, in identischer Weise wie oben für die Fehlportionsaufnahmen beschrieben von der Steuerung "weiterverfolgt" und von einer anderen, stromabwärts oder stromaufwärts angeordneten, der ersten Bahn zugeordneten Ausgleichsbefülllinie mit einer Gutportion befüllt.

Weitere Merkmale der vorliegenden Erfindung ergeben sich aus den beigefügten Patentansprüchen, aus der nachfolgenden Beschreibung bevorzugter Ausführungsbeispiele sowie aus den beigefügten Zeichnungen. Darin zeigen:

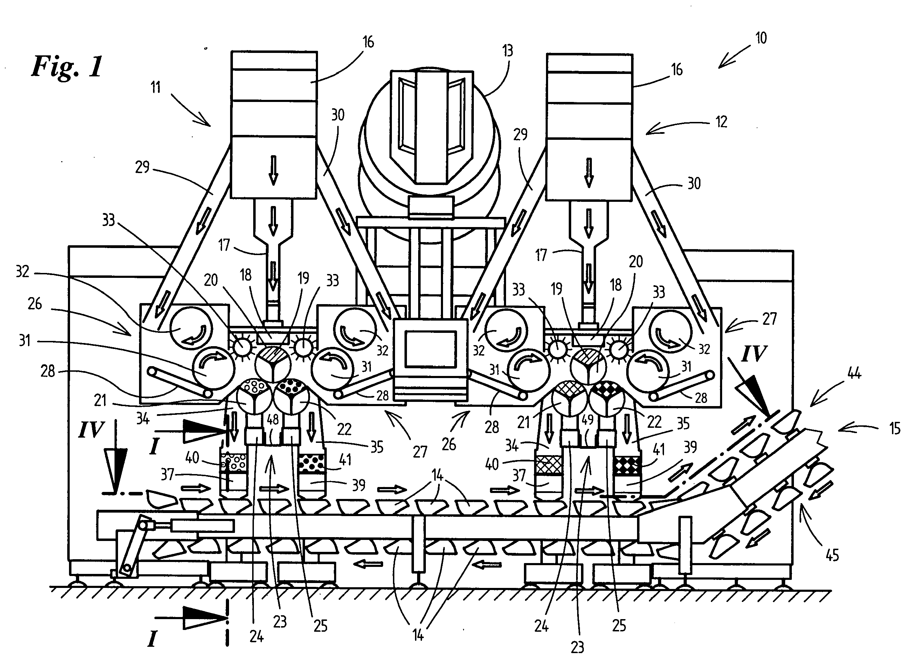

- Fig. 1: eine Gesamtansicht einer Vorrichtung zur Bildung und zum Abtransport von Tabakportionen, die mit dem erfindungsgemäßen Verfahren betrieben wird, in Vorderansicht,
- Fig. 2: einen Teilschnitt durch die Anlage entlang der Schnittlinie I -1 in Fig. 1, nämlich zwei unterschiedlichen Bahnen zugeordnete Befülllinien einer Befüllungsstation,
- Fig. 3: einen Schnitt durch die Befüllungsstation der Fig. 2 entlang der Schnittlinie II - II, nämlich zwei in Förderrichtung hintereinander angeordnete Befülllinien der Befüllungsstation zu zwei unterschiedlichen Betriebszeitpunkten A und B,
- Fig. 4: zwei jeweils spätere Betriebszeitpunkte C und D der hintereinander angeordneten Befülllinien aus Fig. 3,
- Fig. 5: zwei jeweils spätere Betriebszeitpunkte E und F der hintereinander angeordneten Befülllinien aus Fig. 3,
- Fig. 6: einen Schnitt durch die Vorrichtung aus Fig. 1 entlang der Schnittlinie IV - IV, nämlich zwei Draufsichten auf die Aufnahmen eines Endlos - Förderers der Vorrichtung zu zwei anderen Betriebszeitpunkten A und B,
- Fig. 7 - 8: die hintereinander angeordneten Befülllinien aus Fig. 3 zu zwei anderen Betriebszeitpunkten A und B.

Die Zeichnungen zeigen eine Vorrichtung 10 zur Bildung von einzelnen Portionen aus faserigem Gut, nämlich Schnitt-Tabak, und zum nachfolgenden Abtransport derselben.

Die Vorrichtung 10 weist zwei Befüllungsstationen 11, 12 auf, an denen aus einer Lösetrommel 13 zugeführter Tabak gewogen, portioniert und in Aufnahmen 14, nämlich nach oben offenen, bevorzugt trichterartigen Bechern einer Becherkette, eines Endlos-Förderers 15 gefüllt wird. Die Portionen werden mit dem Endlos-Förderer einem Beutelpacker zur weiteren Verarbeitung zugeführt, nämlich insbesondere zur Verpackung der Tabakportionen in geeignete Beutel.

Der Schnitt-Tabak befindet sich zunächst innerhalb der Lösetrommel 13 als wirrer Tabakvorrat. Innerhalb der Lösetrommel 13 werden ungleichmäßige Strukturen des Tabaks sowie Tabakklumpen beseitigt. Zu diesem Zweck verfügt die Lösetrommel 13 bzw. ein Trommelmantel der Lösetrommel 13 innenseitig über entsprechende Bearbeitungsorgane zur Auflockerung und Homogenisierung des Tabaks. Dies können Stifte bzw. Nadeln sein, die etwa in radiale Richtung in das Innere der Trommel weisen. Die Trommel selbst ist schräg nach unten geneigt und wird in der geneigten Stellung durch einen entsprechenden Antrieb in Drehungen um die Trommelmittelachse versetzt. Infolge der Drehungen und der Neigung der Trommel wird der gelockerte Tabak durch diese hindurch transportiert. Die Lösetrommel 13 kann im Detail etwa ausgebildet sein wie in der DE 10 2004 063 057 beschrieben.

Der aus der Lösetrommel 13 austretende Tabakstrom wird anschließend in nicht näher beschriebener Weise geteilt, wobei die einzelnen Teilströme den Befüllstationen 11 bzw. 12 zugeführt werden, nämlich oberhalb des Endlos-Förderers 15 angeordneten Vorratsbehältern 16. Die technischen Funktionen und Merkmale der beiden Befüllstationen 11, 12 werden im Folgenden exemplarisch - soweit übereinstimmend - anhand der Befüllstation 11 beschrieben.

Innerhalb des Vorratsbehälters 16 bzw. innerhalb eines aufrechten Förderschachtes 17 wird aus dem Tabak des Vorratsbehälters 16 durch konvergierende Gestaltung der Förderbahn in Abwärtsrichtung und durch weitere, hier nicht näher erläuterte Maßnahmen, zunächst ein Tabakvlies gebildet und anschließend ein Tabakstrang, der in dem Förderschacht 17 in Vertikalrichtung nach unten gefördert wird.

Der an dem unteren Ende des Förderschachtes 17 austretende Tabakstrang gelangt in den Bereich einer Trennvorrichtung 18. Mittels dieser Trennvorrichtung 18 werden einzelne Grobportionen Tabak abgetrennt. Diese Grobportionen sind in der Regel gegenüber einem zu erreichenden Soll-Gewicht untergewichtig. Die Trennvorrichtung 18 weist jeweils von den Seiten her in die Tabakstränge eintretende Trennkämme auf. Der Vorratsbehälter 16, der Förderschacht 17 sowie die Trennvorrichtung 18 können beispielsweise so ausgebildet sein wie in der DE 33 16 176 A1 beschrieben.

Die in der Regel überwiegend unterdimensionierten Grobportionen werden als Tabakportionen 19 jeweils einem zentralen Zwischenförderorgan 20 zugeführt, nämlich einem um eine horizontale Drehachse drehbaren Zellenrad mit mehreren, nämlich drei um jeweils um 120° in Umfangsrichtung zueinander versetzten Zellen 20.1, 20.2, 20.3 zur Aufnahme der Tabakportionen. Die Zellen oder Taschen 20.1, 20.2, 20.3 sind auf deren in Radialrichtung außenliegenden Seite offen. Das Zwischenförderorgan 20 weist je nach Drehposition verschiedene Betriebszustände auf. In drei nach oben gerichteten Positionen wird jeweils eine der in diesen Positionen jeweils nach oben zeigenden Zellen 20.1, 20.2, 20.3 befüllt und in jeweils schräg nach unten bzw. zur Seite gerichteten Alternativstellungen kann die Tabak-Grobportion durch deren Eigengewicht aus der jeweiligen Zelle entweichen.

In einer der nach oben gerichteten Positionen kann das Zwischenförderorgan 20 die einzelnen, aus dem Förderschacht 17 stammenden Tabak-Grobportionen aufnehmen und für eine vorgegebene Zeitdauer zwischenspeichern bzw. halten. Aus dieser Halteposition heraus kann das Zwischenförderorgan 20 in Uhrzeigerrichtung oder entgegen der Uhrzeigerrichtung in die nach schräg unten gerichteten Positionen rotiert werden.

Je nach Drehrichtung wird die in der entsprechenden Zelle 20.1, 20.2 oder 20.3 positionierte Grobportion Tabak in eines von jeweils seitlich versetzt unterhalb des Zwischenförderorgans 20 angeordneten, als Zellenräder ausgebildeten Wiegeorganen 21, 22 einer Wägeeinrichtung 23 gefördert. Die einzelnen Wiegeorgane 21, 22 weisen - wie das Zwischenförderorgan 20 - jeweils mehrere Zellen 21.1 - 21. 3 bzw. 22.1 - 22. 3 auf zur Aufnahme der jeweils von dem Zwischenförderorgan 20 zugeförderten Tabak-Grobportionen. Funktional sind sie identisch zu dem Zwischenförderorgan 20 ausgebildet. Die Wiegeorgane 21, 22 sind dabei derart seitlich versetzt unterhalb des Zwischenförderers 20 angeordnet, dass eine aus den je nach Position nach schräg unten weisenden Zellen 20.1, 20.2 oder 20.3 herausgleitende Grobportion in eine nach oben zeigende Zelle des Wiegeorgans 21 oder 22 fällt.

Die Wiegeorgane 21, 22 wirken darüber hinaus jeweils mit jeweils den einzelnen Organen zugeordneten Waagen 24, 25 der Wiegeeinrichtung 23 zusammen. Mit Hilfe der Waagen 24, 25 können jeweils die Gewichte der einzelnen Tabakportionen bestimmt werden, die in der nach oben gerichteten Zelle des jeweiligen Wiegeorgans 21, 22 positioniert sind.

Sollte die Messung zur Bestimmung des Gewichtes der Tabakportion ergeben, dass vorbestimmte Bedingungen nicht erfüllt sind, dass insbesondere die gewogene Portion ein geringeres Gewicht aufweist als ein vorbestimmtes Soll-Gewicht, kann der Tabakportion zusätzlicher Tabak hinzugefügt werden, und zwar über entsprechende Feindosierungsaggregate 26 bzw. 27.

Jedes Feindosierungsaggregat 26, 27 weist dabei ein schräg nach unten gerichtetes Band 28 auf, über das aus dem Vorratsbehälter 16 über Zuführschächte 29 bzw. 30 zugeführter Feintabak einer ersten Stachelwalze 31 zugeführt wird. Diese Stachelwalze 31 übernimmt den Tabak und arbeitet mit einer zweiten Stachelwalze 32 zur Bildung einer möglichst gleichmäßigen Tabaklage auf der ersten Stachelwalze 31 zusammen. Durch ein nachfolgendes Stachelrad 33 wird die Tabaklage von der Stachelwalze 32 abgehoben und in hier nicht näher beschriebener Weise der in der entsprechenden, nach oben gerichteten Zelle des Wiegeorgans 21 bzw. 22 angeordneten Grobportion hinzugefügt. Die Feindosierung, nämlich das Hinzufügen von weiterem Feintabak, erfolgt, bis das Soll-Gewicht erreicht ist, mithin die Grobportion als Gutportion klassifiziert werden kann.

Natürlich können in der Steuerung und/oder Regelung verschiedenste Bedingungen hinterlegt sein, denen die abgewogenen Gutportionen genügen müssen, um als Gutportionen klassifiziert zu werden, etwa Sollgewichtsgrenzwerte, Intervalle oder dergleichen.

Anschließend wird die nach oben gerichtete Zelle eines der Wiegeorgane 21, 22, in der die Gutportion angeordnet ist, derart in Drehung versetzt, dass sie die Gutportion in eine unterhalb des jeweiligen Wiegeorganes 25, 26 angeordnete Zuführung 34 bzw. 35, nämlich aufrechte Zuführschächte, entleert. Gutportionen, die dem Wiegeorgan 25 entstammen, werden über die Zuführung 34 einem zentralen, oberhalb von zwei Befülllinien 36, 37 angeordneten Verteilerorgan 40 zugefördert. Gutportionen, die dem Wiegeorgan 26 entstammen, werden über eine entsprechende Zuführung 35 einem zentralen, oberhalb von zwei Befülllinien 38, 39 angeordneten Verteilerorgan 41 zugefördert.

Die Befülllinien 36, 37, 38, 39 sind als Befüllungsschächte ausgebildet. Die Verteilerorgane 40, 41 sind funktional identisch aufgebaut wie das Zwischenförderorgan 20, nämlich als Zellenräder mit drei Zellen 40.1 - 40.3 bzw. 41.1 - 41.3.

Die Tabak-Gutportionen werden durch das jeweilige Verteilerorgan 40, 41 der entsprechenden Befülllinie 36, 37, 38 oder 39 der Befüllungsstationen 11 bzw. der Befüllungsstation 12 zugeführt, d.h. in die Befüllungsschächte 36, 37, 38 oder 39 entleert.

Die Entleerungszeitpunkte des jeweiligen Verteilerorgan 40, 41 sind dabei derart auf die unterhalb der Befülllinien 36, 37, 38, 39 vorbeigeförderten Aufnahmen 14 abgestimmt, dass die jeweilige Gutportion entlang der jeweiligen Befülllinie 36, 37, 38, 39 unmittelbar in die entsprechende, vorbeigeförderte Aufnahme 14 fällt.

Der Endlos-Förderer 15 weist zur Bildung der Aufnahmebahnen 46, 47 mehrere parallele, endlose Förderorgane auf, die als endlose Ketten 42, 43 ausgebildet sind, und an denen die Aufnahmen 14 befestigt sind. Die Ketten 42, 43 bzw. Aufnahmebahnen 46, 47 sowie die entsprechenden, der jeweiligen Aufnahmebahn 46, 47 zugeordneten Aufnahmen 14 laufen parallel und mit Abstand voneinander unter Bildung eines oberen Fördertrumms 44 und eines unteren Rücklauftrumms 45. Der Endlos-Förderer 15 bzw. die beiden Aufnahmebahnen 46, 47 verlaufen im Bereich der Befüllungsstationen 11 und 12 unterhalb der Befüllungslinien 36, 37, 38, 39 horizontal.

Am in Förderrichtung hinteren Ende des oberen Fördertrums 44 verläuft der Förderer 15 schräg nach oben geneigt. In einer nicht dargestellten Entleerungsstation werden die mit Gutportionen gefüllten Aufnahmen 14 des Förderers 15 durch Kippen derselben infolge der Umlenkung der Ketten 42, 43 beim Übergang vom oberen Fördertrumm 44 in den Rücklauftrumm 45 selbsttätig entleert und einem Beutelpacker zur weiteren Verarbeitung zugeführt.

Trotz der vorhandenen Feindosierungsaggregate 26, 27 kann es geschehen, dass beim Wiegen der einzelnen Portionen in den Wiegeorganen 21, 22 festgestellt wird, dass die abgewogene Portion nicht weiter verwendbar ist, etwa wenn das Gewicht der abgewogenen Portion nach Hinzufügen weiteren Feintabaks oberhalb eines vorgegebenen Soll-Wertes liegt oder wenn bereits das Gewicht der ursprünglichen Grobportion oberhalb des Soll-Wertes liegt.

Diese Schlecht- oder Fehlportionen werden ausgeschleust, indem die Wiegeorgane 21, 22 derart gedreht werden, dass die Fehlportion in eine Ausschleuseeinrichtung entleert wird, etwa in eine schräg nach unten geneigte Ausschleuserinne 48.

Weitere Besonderheiten der Erfindung betreffen die Regelung und/oder Steuerung bzw. die Regelungs- und/oder Steuerungseinrichtung der Vorrichtung 10, insbesondere der einzelnen Befüllvorgänge. Jede Befüllungsstation 11, 12 weist - wie bereits beschrieben - jeweils vier Befülllinien 36 - 39 auf, über die die Aufnahmen 14 der Aufnahmebahnen 46, 47 befüllt werden können. Dabei sind die Befüllstationen 11, 12 in Förderrichtung des Endlos-Förderers 15 hintereinander angeordnet.

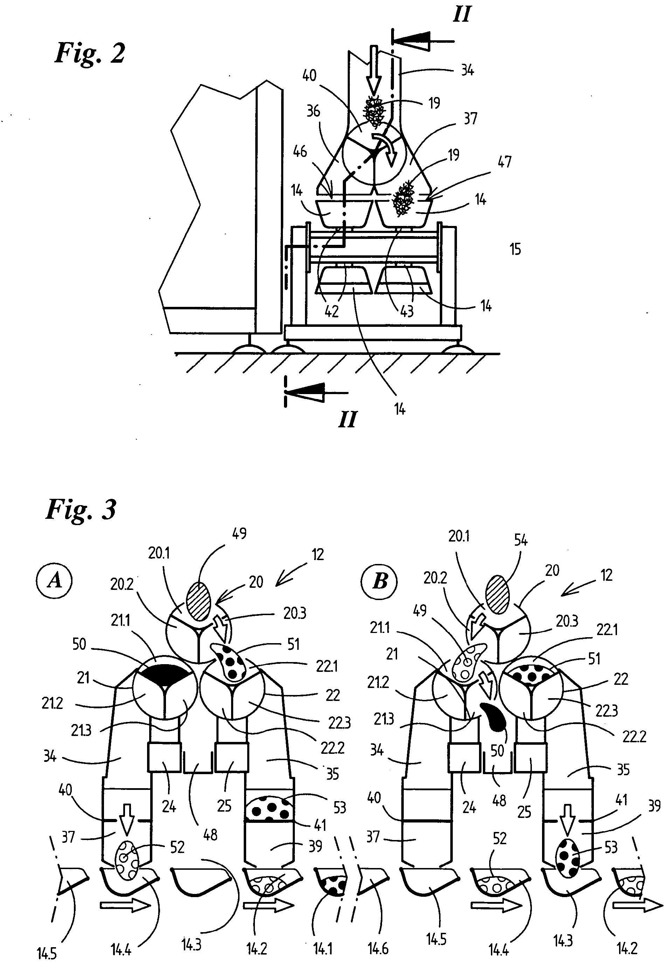

Jeweils zwei Befülllinien jeder Befüllungsstation 11, 12 sind einer Förderbahn zugeordnet. So sind die Befülllinien 37, 39 in Fig. 2 der rechten Förderbahnen 47 zugeordnet, d. h. die Befülllinien 37 können Aufnahmen 14 in dieser rechten Förderbahn 47 mit Gutportionen befüllen. Diese Befülllinien 37, 39 sind in Förderrichtung des Endlos-Förderers 15 hintereinander angeordnet. In ähnlicher Weise weisen die Befüllungsstationen 11, 12 jeweils zwei hintereinander angeordnete Befülllinien 36, 38 auf, die die Aufnahmen 14 der in Fig. 2 linken Förderbahn 46 befüllen können. Insgesamt sind daher pro Förderbahn vier hintereinander angeordnete Förderlinien vorgesehen.

Die in Förderrichtung des Endlos-Förderers 15 hintereinander angeordneten Befülllinien 36, 38 der in Förderrichtung des Endlos-Förderers 15 stromaufwärts angeordneten Befüllungsstation 11 befüllen taktweise eine erste, unterhalb der Befülllinien 36, 38 angeordnete Bahn 46 von Aufnahmen 14 des Endlos-Förderers 15, nämlich die in Fig. 2 dargestellt linke Aufnahmebahn 46. Die ebenfalls in Förderrichtung des Endlos-Förderers 15 hintereinander angeordneten Befülllinien 37, 39 der in Förderrichtung des Endlos-Förderers 15 stromabwärts angeordneten, zweiten Befüllungsstation 12 befüllen taktweise die entsprechende, unterhalb der Befülllinien 37, 39 angeordnete, rechte Aufnahmebahn 47.

Die Steuerung und/oder Regelung gibt dabei einen Befüllungstakt vor, d.h. eine durchschnittliche Zeitspanne zwischen zwei regulären Befüllvorgängen einer der taktweise arbeitenden Befülllinien.

Die jeweils anderen, der rechten Aufnahmebahn 47 zugeordneten Befülllinien 37, 39 der ersten Befüllungsstation 11 befüllen die Aufnahmen 14 der rechten Aufnahmebahn 47 dagegen nur bei Bedarf. Gleiches gilt für die anderen, der linken Aufnahmebahn 46 zugeordneten Befülllinien 36, 38 der zweiten Befüllungsstation 12.

Die genaueren Zusammenhängen werden nachfolgend erläutert:
Die Steuerung und/oder Regelung erfolgt in einer besonderen Ausführungsform derart, dass nach Detektion einer Fehlportion in einer der Wiegorgane 21 oder 22 diejenige Aufnahme 14 erfasst wird, die die ursprünglich zur Befüllung dieser Aufnahme 14 vorbestimmte Befülllinie befüllt hätte, hätte die Füllgutportion den vorbestimmten Bedingungen, insbesondere dem Soll-Gewicht für eine Gutportion, entsprochen. Diese Aufnahme, für die die entsprechende Füllgutportion, d.h. die Fehlportion, ursprünglich vorgesehen war, wird im Folgenden Fehlportionsaufnahme genannt.

Die Steuerung gibt demnach bei Detektion einer Fehlportion nicht nur ein Signal zur Ausschleusung der Fehlportion, sondern erfasst, d.h. bestimmt bzw. berechnet darüber hinaus diejenige Aufnahme mittels geeigneter Steuerungs- und/oder Regelungsalgorithmen, für die die Fehlportion vorgesehen war. Die Steuerung und/oder Regelung "verfolgt" die Fehlportionsaufnahme anschließend während ihrer Bewegung in Förderrichtung entlang der Förderbahn bzw. der Aufnahmebahn weiter, d.h. während die einzelnen Aufnahmen der Aufnahmebahn unterhalb der Befüllungslinien weiterbewegt werden.

Bevorzugt wird zu diesem Zweck in einem dem Endlos-Förderer 15, insbesondere den Aufnahmebahnen bzw. den Aufnahmen, zugeordneten Schieberegister der Steuerung und/oder Regelung ein entsprechender Merker gesetzt.

Das Weiterverfolgen der leeren Fehlportionsaufnahme ermöglicht es, die Fehlportionsaufnahme 14 an einer anderen als der ursprünglich dafür vorgesehen Befülllinie mit einer Gutportion zu befüllen, sobald sich die Fehlportionsaufnahme an dieser anderen Befülllinie zur möglichen Befüllung vorbeibewegt. Die andere Befülllinie, die die Befüllung des Fehlportionsaufnahme schließlich vornimmt, wird im Rahmen dieser Anmeldung als Ausgleichsbefülllinie bezeichnet.

Eine erfindungsgemäße Alternative der Befüllung von Fehlportionsaufnahmen wird anhand der Fig. 3 - 5 näher erläutert, nämlich die Befüllung einer Fehlportionsaufnahme, die von einer ersten, stromaufwärts angeordneten Befülllinie nicht befüllt werden kann, durch eine zweite, stromabwärts angeordnete Befülllinie. Die Fig. 3 - 5 zeigen dabei die der rechten Aufnahmebahn 47 zugeordneten Befülllinien 37, 39 der zweiten Befüllungsstation 12 zu verschiedenen, aufeinander folgenden Betriebszeitpunkten A, B, C, D, E, F.

Zum Zeitpunkt A in Fig. 3 ist die obere Zelle 20.1 des Zwischenförderorgans 20 mit einer Tabak-Grobportion 49 befüllt. In der oberen Zelle 21.1 des seitlich darunter angeordneten, in der Zeichnung linken Wiegeorgans 21 befindet sich eine detektierte Fehlportion 50, d.h. eine Portion, die ein Gewicht aufweist, das größer ist als ein vorgegebenes Sollgewicht. Derartige Fehlportionen werden detektiert, indem die entsprechende Portion in dem Wiegeorgan 21 abgewogen wird und indem die Steuerung und/oder Regelung der Vorrichtung 10 das abgewogene Gewicht mit einem Soll-Gewicht vergleicht. Wenn eine Unterdimensionierung der ursprünglichen Grobportion festgestellt wird, wird zunächst über das Feindosierungsaggregat in einzelnen Schritten weiterer Feintabak hinzugefügt, wobei das jeweilige Gesamtgewicht der Portion jeweils nach den Hinzufügungen erneut gemessen wird. Sollte das Endgewicht der Portion oder bereits das Gewicht der ursprünglichen Grobportion oberhalb eines Soll-Gewichtes liegen, wird die Portion als Fehlportion erkannt.

Die obere Zelle 22.1 des rechten Wiegeorgans 22 wird zum dargestellten Zeitpunkt A mit einer abzuwiegenden Grobportion 51 befüllt. Das linke, den Befülllinien 36, 37 gemeinsame Verteilerorgan 40 entleert über die Befülllinie 37 eine Gutportion 52 in eine Aufnahme 14.4 der Aufnahmebahn 47. Das rechte Verteilerorgan 41 speichert in dessen oberer Zelle eine Gutportion 53. Die Gutportionen sind Portionen, die nach dem Abwiegen und nach einem eventuellen Hinzufügen weiteren Tabaks durch die Feindosierungsaggregate einem vorbestimmten Sollgewicht entsprechen.

Die einzelnen Entleerungsvorgänge des Zwischenförderorgans 20, der Wiegeorgane 21, 22 sowie der Verteilerorgane 23, 24 wurden bereits weiter oben erläutert. Sie werden bewirkt, indem diese als Zellenräder ausgebildeten Organe eine Rotation um eine horizontale Drehachse ausführen, sodass die in der jeweiligen Zelle enthaltene Tabakportion durch ihr Eigengewicht aus der Zelle nach seitlich unten herausfällt.

Zu dem Zeitpunkt B sind die Aufnahmen 14 der Aufnahmebahn 47 jeweils um eine Aufnahme 14 nach rechts bewegt worden. Die obere Zelle 20.1 wird zu dem darstellten Zeitpunkt B mit einer neuen Grobportion 54 befüllt. Die Grobportion 49 wird in das linke Wiegeorgan 21 entleert. Die Fehlportion 50 wird in die Ausschleuserinne 48 ausgeschleust. Die Gutportion 53 wird in die für diese vorgesehene, dem Befüllungstakt der Linie 39 entsprechende Aufnahme 14.3 entleert. Die einzelnen Befülllinien 37, 39 befüllen jeweils jede zweite der Aufnahmen 14. Die linke Befülllinie 37 befüllt dabei taktgemäß zunächst die Aufnahmen 14 mit geradem Index 14.2, 14. 4, 14. 6.... etc. Die rechte Befülllinie 39 befüllt entsprechend die Aufnahmen 14 mit ungeradem Index 14.1, 14. 3, 14. 5 .....etc. Gemäß vorgegebenem Befüllungstakt ist daher die Aufnahme 14.5 vorbestimmt, von der Befülllinie 39 befüllt zu werden, die Aufnahme 14.6 dagegen von der Aufnahme 37. Wie zum Zeitpunkt B erkennbar ist, hätte diese Aufnahme 14.6 dabei mit derjenigen Portion befüllt werden sollen, die der ausgeschleusten Fehlportion 50 zugrunde liegt, wenn diese Portion den vorbestimmten Bedingungen, nämlich dem Sollgewicht entsprochen hätte.

Die Steuerung und/oder Regelung der Vorrichtung 10 ermittelt anhand geeigneter Algorithmen die Aufnahme 14.6 als diejenige (Fehlportions-)Aufnahme, für die die Fehlportion 50 bzw. die der Fehlportion 50 zugrunde liegende Portion bestimmt war und verfolgt diese Aufnahme 14.6 weiter, d.h. erfasst die Position dieser Fehlportionsaufnahme relativ zu den Befülllinien, sodass eine andere Befülllinie die Befüllung dieser Fehlportionsaufnahme übernehmen kann, nämlich im vorliegenden Ausführungsbeispiel die Befülllinie 39. Dies wird nachfolgend näher erläutert.

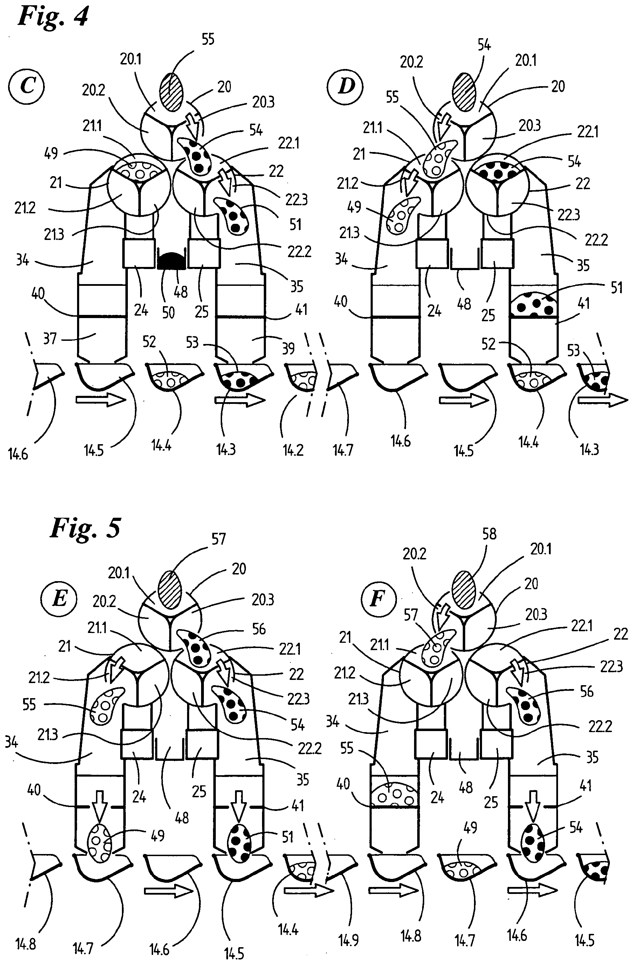

Zu dem geringfügig späteren Zeitpunkt C in Fig. 4 sind die Aufnahmen 14 noch nicht weiterbefördert worden. Allerdings wird die Grobportion 54 in der oberen Zelle 20.1 des Zwischenförderers bereits in die obere Zelle 22.1 des rechten Wiegeorgans 22 entleert. Die Grobportion 51 wurde zwischenzeitlich abgewogen. Gegebenfalls wurde der Grobportion 51 mittels des Feindosierungsaggregats 27 Tabak hinzugefügt, um das vorgegebene Sollgewicht zu erreichen. Die Portion 51 wird schließlich zum dargestellten Zeitpunkt C als Gutportion 51 entlang der Zuführung 35 in das Verteilerorgan 41 entleert, d.h. dem Verteilerorgan 41 zugefördert.

Zu einem späteren Zeitpunkt D sind die Aufnahmen 14 jeweils wiederum um eine Aufnahme 14 nach rechts bewegt worden. Die obere Zelle 20.1 des Zwischenförderorgans 20 wird mit einer neuen Grobportion 56 befüllt. Die Groportion 55 wird in das linken Wiegeorgan 21 entleert. Die in dem linken Wiegeorgan 21 zuvor abgewogene Portion 49 wird als Gutportion 49 in das linke Verteilerorgan 40 entleert. Es ist zu erkennen, dass an der linken Befülllinie 37 zur Befüllung der Fehlportionsaufnahme 14.6, die von dieser Befülllinie entsprechend dem vorgegebenen Takt hätte befüllt werden müssen, keine Gutportion zur Verfügung steht, mit der die Fehlportionsaufnahme 14.6 taktgemäß befüllt werden könnte. Zum Zeitpunkt D befindet sich die Fehlportionsaufnahme 14.6 gerade unmittelbar unterhalb der Befülllinie 37, d.h. in einer Position, in der die Befüllung derselben stattfinden könnte bzw. müsste. Da keine Gutportion an der Befülllinie 37 zur Verfügung steht, bleibt die Aufnahme leer, d.h. unbefüllt.

Zu einem späteren Zeitpunkt E in Fig. 5 sind die Aufnahmen 14 jeweils wieder um eine Aufnahme 14 nach rechts bewegt worden. Die obere Zelle 20.1 des Zwischenförderorgans 20 wird mit einer neuen Grobportion 57 befüllt. Die Groportion 55 ist in dem linken Wiegeorgan 21 abgewogen worden und wird als Gutportion 55 in das linke Verteilerorgan 40 entleert. Besonders wichtig ist nun, dass die Steuerung und/oder Regelung die linke Befülllinie 37 anweist, anstelle der Fehlportionsaufnahme 14.6, die sie nicht befüllen konnte, die nachfolgende Aufnahme 14.7 zu befüllen, die eigentlich von der Befülllinie 39 hätte befüllt werden sollen. Die rechte Befülllinie 39 befüllt zum Zeitpunkt E noch planmäßig die für die Befülllinie 39 vorbestimmte Aufnahme 14.5 mit der Gutportion 51.

Zu einem späteren Zeitpunkt F sind die Aufnahmen 14 jeweils wiederum um eine Aufnahme 14 nach rechts bewegt worden. Die obere Zelle 20.1 des Zwischenförderorgans 20 wird mit einer neuen Grobportion 58 befüllt. Die Grobortion 57 wird in das linke Wiegeorgan 21 entleert. Die Grobportion 56 ist in dem rechten Wiegeorgan 22 abgewogen worden und wird als Gutportion 56 in das rechte Verteilerorgan 40 entleert. Besonders wichtig ist, dass die Steuerung und/oder Regelung die rechte Befülllinie 39 anweist, außerhalb des Taktes die Fehlportionsaufnahme 14.6 zu befüllen. Die Befülllinie 39 befüllt daher abweichend von den regulären Befüllabläufen zwei Aufnahmen hintereinander, nämlich die Aufnahmen 14.5 und 14.6. Dies führt im weiteren Ablauf im Ergebnis zu einer Taktverschiebung der Befüllvorgänge, denn die linke Befülllinie 37 befüllt ab diesem Zeitpunkt die Aufnahmen mit ungeradem Index 14.7, 14.9, 14.11 .... etc., die rechte Befülllinie dagegen die Aufnahmen mit geradem Index 14.6, 14.8, 14.11 .... etc.

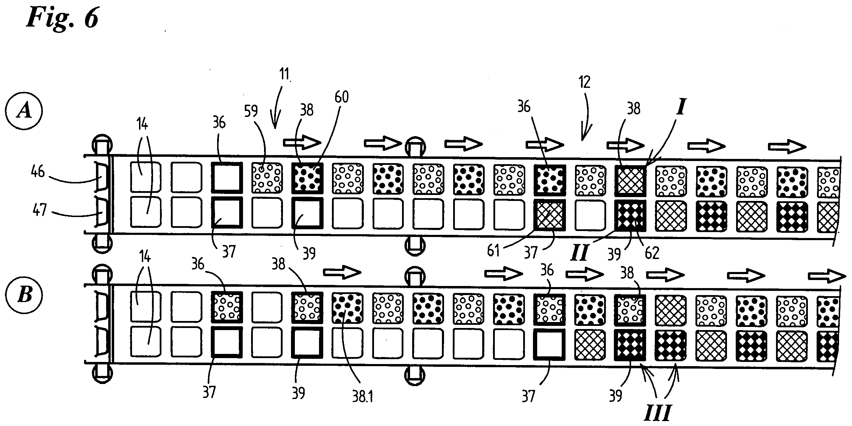

In der Fig. 6 ist eine weitere Ausführungsform der Steuerung und/oder Regelung der Befüllung der Aufnahmen 14 sowie des Ausgleichs von Fehlportionsaufnahmen dargestellt. Dort ist die Möglichkeit visualisiert, den Fehlportionsausgleich nicht durch eine Befülllinie ein und derselben Befüllungsstation ausführen zu lassen, sondern von einer Befülllinie einer anderen, nachfolgenden Befüllungsstation.

Die obere Zeichnung der Fig. 6 zeigt dabei einen ersten Betriebszeitpunkt A des Endlos-Förderers 15, die untere Zeichnung einen späteren Betriebszeitpunkt B, zu dem sämtliche Aufnahmen 14 um eine Aufnahme nach rechts bewegt worden sind. In verbreiterten Umrisslinien sind die einzelnen Positionen der Befülllinien 36 - 39 der beiden Befüllungsstationen 11 sowie 12 gekennzeichnet.

Die Schraffur 59 stellt Gutportionen in den Aufnahmen 14 dar, die entweder von der der Aufnahmebahn 46 zugeordneten Befülllinie 36 oder von der der anderen Aufnahmebahn 47 zugeordneten Befülllinie 37 der ersten, gegenüber der zweiten Befüllungsstation 12 stromaufwärts angeordneten Befüllungsstation 11 stammen können. Die Schraffur 60 stellt Gutportionen in den Aufnahmen 14 dar, die entweder von der der Aufnahmebahn 46 zugeordneten Befülllinie 38 oder von der der anderen Aufnahmebahn 47 zugeordneten Befülllinie 39 der ersten Befüllungsstation 11 stammen können.

Die Schraffur 61 stellt Gutportionen in den Aufnahmen 14 dar, die entweder von der der Aufnahmebahn 46 zugeordneten Befülllinie 36 oder von der der anderen Aufnahmebahn 47 zugeordneten Befülllinie 37 der zweiten, stromabwärts angeordneten Befüllungsstation 12 stammen können. Die Schraffur 62 stellt Gutportionen in den Aufnahmen 14 dar, die entweder von der der Aufnahmebahn 46 zugeordneten Befülllinie 38 oder von der der anderen Aufnahmebahn 47 zugeordneten Befülllinie 39 der zweiten Befüllungsstation 12 stammen können.

Gut zu erkennen ist, dass die Befülllinien 36 - 39 der ersten Befüllungsstation11 in der Regel, d.h. taktgemäß nur die Aufnahmen der Aufnahmebahn 46 befüllen, die Befülllinien 36 - 39 der zweiten Befüllungsstation 12 in der Regel nur die Aufnahmen der Aufnahmebahn 47. Speziell befüllen die Befülllinien 36, 38 der ersten Befüllungsstation 11 die Aufnahmen der Aufnahmebahn 46 taktgemäß, die Befülllinien 37, 39 taktgemäß die Aufnahmen der Aufnahmebahn 47.

Weiter ist zu erkennen, dass ausnahmsweise die zweite Befüllungsstation 12 eine Fehlportionsaufnahme der Aufnahmebahn 46 befüllt hat. Denn in der oberen Bahn 46 ist eine durch das Bezugszeichen I gekennzeichnete Aufnahme 14 mit Schraffur 61 zu erkennen. Diese Aufnahme 14 ist eine Fehlportionsaufnahme, die durch eine Fehlportion in der Befülllinie 38 der ersten Befüllungsstation 11 verursacht wurde. Die leere Fehlportionsaufnahme wurde schließlich durch die Befülllinie 36 der zweiten Befüllungsstation 12 befüllt.

Der Befüllvorgang durch die Ausgleichsbefülllinie 36 der zweiten Befüllungsstation verursachte allerdings zugleich eine unbefüllte Aufnahme in der zweiten Aufnahmebahn 47. Dies hat folgenden Hintergrund: Den Befülllinien 36, 37 der zweiten Befüllungsstation 12 werden Gutportionen - wie weiter oben bereits näher erläutert - über ein und dieselbe Zuführung 34 sowie dasselbe Verteilerorgan 40 zugeführt. Zu einem bestimmten Zeitpunkt kann in dieser Ausführungsform daher entweder nur der Befülllinie 36 oder nur der Befülllinie 37 eine Gutportion zur Verfügung gestellt werden und somit nur eine dieser Befülllinien einen Befüllvorgang durchführen.

Zum Zeitpunkt der von der Befülllinie 36 bewirkten Ausgleichsbefüllung der Fehlportionsaufnahme in der Bahn 46 hätte die Befülllinie 37 eine taktgemäße Befüllung der auf gleicher senkrechter Linie zur Förderrichtung wie die Fehlportionsaufnahme angeordneten, zu dieser parallelen Aufnahme der Bahn 47 durchführen müssen. Die parallele Aufnahme, die nahezu zeitgleich hätte gefüllt werden müssen, ist durch das Bezugszeichen II gekennzeichnet. Die beschriebene zeitgleiche Befüllung war nicht möglich, sodass in der Bahn 47 ebenfalls eine Aufnahme ohne Füllgutportion entstanden ist. Diese Aufnahme ohne Füllgutportion wurde dann von der nachfolgenden Ausgleichsbefülllinie derselben Befüllungsstation 12 befüllt, sodass an der Position III hintereinander zwei Gutportionen mit der Schraffur 62 zu erkennen sind.

Wie der Fachmann des Standes der Technik erkennt, kann es alternativ möglich sein, auch zwei Befüllungsvorgänge von Befülllinieh mit gemeinsamer Zuführung wenigstens annähernd zeitgleich vorzunehmen, zumindest jedenfalls in Zeitabständen, die ausreichend sind, parallele, d.h. auf einer gemeinsamen senkrechten Linie befindliche Aufnahmen zu befüllen. Ob dies möglich ist, hängt von der Geschwindigkeit ab, in der die Aufnahmen an den Befülllinien vorbeibewegt werden und/oder von der Verweildauer der Aufnahmen in Stellungen unterhalb der Befülllinien, in denen diese befüllt werden können sowie von der Geschwindigkeit, in der die Befüllvorgänge vorgenommen werden können.

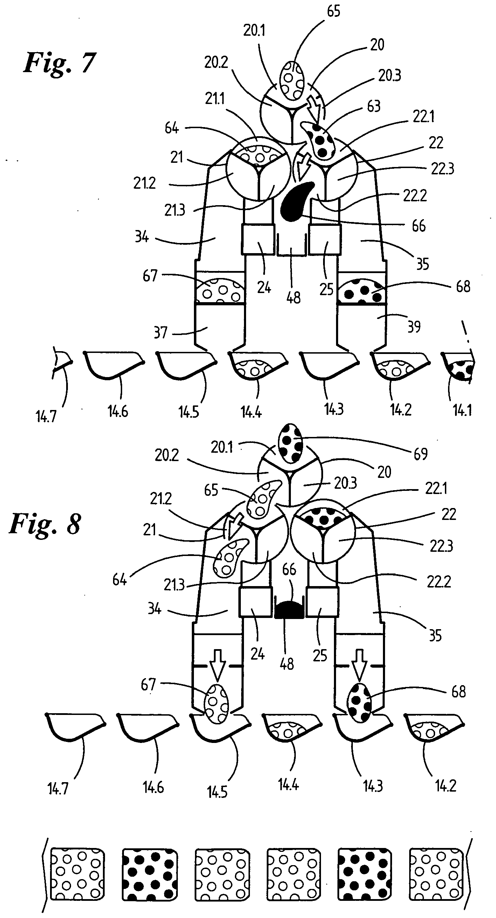

Die Fig. 7 und 8 schließlich zeigen eine Ausführungsform der Steuerung und/oder Regelung, in der eine Ausgleichsbefüllung durch eine Befülllinie vorgenommen wird, die relativ zu der Befülllinie, für die die Fehlportion vorgesehen war, stromaufwärts angeordnet ist. Die Fig. 7 und 8 zeigen dabei die der rechten Aufnahmebahn 47 zugeordneten Befülllinien 37, 39 der zweiten Befüllungsstation 12 zu verschiedenen, aufeinander folgenden Betriebszeitpunkten A und B.

Zum Zeitpunkt A ist die obere Zelle 20.1 des Zwischenförderorgans 20 mit einer Tabak-Grobportion 65 befüllt. In der oberen Zelle 21.1 des darunter angeordneten, in der Zeichnung linken Wiegeorgans 21 befindet sich eine Grobportion 64, deren Gewicht bestimmt wird. In die obere Zelle 22.1 des rechten Wiegeorgans 22 entleert das Zwischenförderorgan 20 eine Grobportion 63. Die einzelnen Befülllinien 37, 39 befüllen jeweils jede zweite der Aufnahmen 14. Die linke Befülllinie 37 befüllt dabei taktgemäß die Aufnahmen 14 mit geradem Index 14.2, 14. 4, 14. 6.... etc. Die rechte Befülllinie 39 befüllt entsprechend die Aufnahmen 14 mit ungeradem Index 14.1, 14. 3, 14. 5 .....etc. Gemäß vorgegebenem Befüllungstakt ist daher die Aufnahme 14.5 vorbestimmt, von der Befülllinie 39 befüllt zu werden, die Aufnahme 14.6 dagegen von der Aufnahme 37.

Das rechte Wiegeorgan 22 entleert eine Fehlportion 66 in die Ausschleuserinne 48. Die Fehlportion 66 war für die rechte Befülllinie 39 bestimmt, die die der Fehlportion 66 zugrunde liegende Portion in die Aufnahme 14.5 gefüllt hätte. Die obere Zelle des Verteilerorgans 40 ist mit einer Gutportion 67 befüllt, die obere Zelle des Verteilerorgans 41 mit einer Gutportion 68.

Zum einem etwas späteren Zeitpunkt B, zu dem die Aufnahmen 14 um etwas weniger als eine Aufnahme nach rechts bewegt worden sind, ist die obere Zelle 20.1 des Zwischenförderorgans 20 mit einer neuen Tabak-Grobportion 69 befüllt worden. Die Tabak-Grobportion 65 wird in das linke Wiegeorgan 21 entleert. Die Grobportion 64 ist in dem linken Wiegeorgan 21 abgewogen worden und wird in das Verteilerorgan 40 entleert. Die Gutportion 67 wird von der Ausgleichsbefülllinie 37 in die Aufnahme 14.5 gefüllt, sodass sowohl die Aufnahme 14.4 als auch die Aufnahme 14.5 von der Ausgleichsbefülllinie 37 befüllt wurden.

Die Ausgleichsbefülllinie 37 befüllt daher abweichend von den regulären Befüllabläufen zwei Aufnahmen hintereinander. Dies führt im weiteren Ablauf im Ergebnis zu einer Taktverschiebung, denn die linke Befülllinie 37 befüllt ab diesem Zeitpunkt die Aufnahmen mit ungeradem Index 14.7, 14.9, 14.11 .... etc., die rechte Befülllinie dagegen die Aufnahmen mit geradem Index 14.6, 14.8, 14.11 .... etc.

Wie der Fachmann erkennt, lassen sich die einzelnen Steuerungs- und/oder Regelungsvarianten mit bekannten Steuerungs- und/oder Regelungseinrichtungen, geeigneten Sensoren etc. ohne Weiteres umsetzen, sodass hier auf die genaue Ausbildung der vorgenannten Einrichtungen, Sensoren etc. verzichtet wird.

## Patentansprüche

1. Verfahren zur Bildung von Portionen aus faserigem Gut, insbesondere Tabak, und zum Abtransport derselben durch einen (Endlos-)Förderer (15) mit mindestens einer Bahn von Aufnahmen (14) für je eine Portion, wobei die Aufnahmen (14) an wenigstens zwei Befüllungslinien (36 - 39) einer oder mehrerer Befüllungsstationen (11, 12) mit einzelnen Portionen des Füllgutes befüllt werden, und wobei vor den einzelnen Befüllvorgängen einzelne Portionen des Füllgutes abgewogen werden und abgewogene Portionen, die vorbestimmten Bedingungen entsprechen - Gutportionen -, taktweise in die Aufnahmen (14) gefüllt werden und abgewogene Portionen, die den vorbestimmten Bedingungen nicht entsprechen, detektiert und als Fehlportionen ausgeschleust werden, **gekennzeichnet durch** folgende Schritte:
a) nach Detektion einer Fehlportion wird diejenige Aufnahme (14) erfasst, den die ursprünglich zur Befüllung dieser Aufnahme (14) vorbestimmte Befülllinie (36 - 39) mit der Füllgutportion, auf der die Fehlportion basiert, befüllt hätte, hätte die Füllgutportion den vorbestimmten Bedingungen entsprochen - Fehlportionsaufnahme,
b) eine andere als die ursprünglich für die Befüllung der Fehlportionsaufnahme vorbestimmte Befülllinie (36 - 39) - Ausgleichsbefülllinie - befüllt die Fehlportionsaufnahme, vorzugsweise außerhalb deren ursprünglichen Befülltaktes, mit einer den vorbestimmten Bedingungen entsprechenden Gutportion.

2. Verfahren gemäß Anspruch 1, **dadurch gekennzeichnet, dass** die Erfassung der Fehlportionsaufnahme erfolgt, indem die Position der Fehlportionsaufnahme innerhalb der Bahn (46, 47) von Aufnahmen (14) und/oder relativ zu den Positionen der Befüllungslinien mittels geeigneter Steuerungs- und/oder Regelungsalgorithmen bestimmt, insbesondere berechnet wird, vorzugsweise unmittelbar nach Detektion der Fehlportion mittels einer Wägeeinrichtung (23).

3. Verfahren gemäß Anspruch 2, **dadurch gekennzeichnet, dass** die Position der erfassten Fehlportionsaufnahme während deren Förderbewegung weiterverfolgt wird, mindestens bis zur Befüllung der Fehlportionsaufnahme durch die Ausgleichsbefülllinie.

4. Verfahren gemäß einem oder mehreren der vorhergehenden Ansprüchen, **dadurch gekennzeichnet, dass** die Ausgleichsbefülllinie (36 - 39) die Fehlportionsaufnahme unmittelbar nach einer taktgemäßen, nämlich dem ursprünglichen Befülltakt der Ausgleichsbefülllinie (36 - 39) entsprechenden Befüllung einer der Fehlportionsaufnahme in Förderrichtung des Förderers (15) unmittelbar vorausgehenden Aufnahme (14) befüllt.

5. Verfahren gemäß einem oder mehreren der vorhergehenden Ansprüchen, **dadurch gekennzeichnet, dass** die Fehlportionsaufnahme von einer Ausgleichsbefülllinie (36 - 39) befüllt wird, die in Förderrichtung stromabwärts der ursprünglich für die Befüllung der Aufnahme (14) vorbestimmten Befülllinie (36 - 39) angeordnet ist.

6. Verfahren gemäß einem oder mehreren der vorhergehenden Ansprüchen, **dadurch gekennzeichnet, dass** die Fehlportionsaufnahme von einer Ausgleichsbefülllinie (36 - 39) befüllt wird, die in Förderrichtung stromaufwärts der ursprünglich für die Befüllung der Aufnahme (14) vorbestimmten Befülllinie (36 - 39) angeordnet ist.

7. Verfahren gemäß einem oder mehreren der vorhergehenden Ansprüchen, **dadurch gekennzeichnet, dass** ein oder mehrere Gutportionen nach dem Abwiegen, allerdings vor der Befüllung einer Aufnahme (14) für eine bestimmte Zeitdauer in mindestens einem Speicher zur Aufnahme von Füllgutportionen, insbesondere einem als Zellenrad ausgebildeten Verteilerorgan (40, 41), zwischengespeichert werden.

8. Verfahren gemäß einem oder mehreren der vorhergehenden Ansprüchen, **dadurch gekennzeichnet, dass** die taktgemäßen Befüllvorgänge an den einzelnen, in Förderrichtung hintereinander angeordneten Befüllungslinien (36, 38; 37, 39) jeweils zeitgleich erfolgen.

9. Verfahren gemäß Anspruch 8, **dadurch gekennzeichnet, dass** eine einer ersten Aufnahmebahn (46, 47) zugeordnete Befüllungslinie (36 - 39) die Aufnahmen (14) dieser Förderbahn (46, 47) taktgemäß befüllt und dass eine einer zweiten, insbesondere zur ersten Bahn parallelen, Aufnahmenbahn (46, 47) zugeordnete Befüllungslinie (36 - 39) als Ausgleichsbefülllinie der zweiten Aufnahmebahn (46, 47) dient, indem sie Fehlportionsaufnahmen dieser zweiten Bahn bei Bedarf befüllt, wobei die abgewogenen Gutportionen den beiden Befüllungslinien einzeln mittels eines gemeinsamen Verteilerorgans (40, 41) zugeführt werden, das die abgewogenen Gutportionen bedarfsabhängig der einen oder der anderen Befüllungslinie (36 - 39) zuführt.

10. Verfahren gemäß Anspruch 9, **dadurch gekennzeichnet, dass** eine möglicherweise durch die Ausgleichsbefüllung der Fehlportionsaufnahme der zweiten Bahn (46, 47) innerhalb der ersten Bahn (46, 47) bewirkte Aufnahme (14) ohne Füllgut erfasst wird und durch eine stromabwärts oder stromaufwärts angeordnete, weitere, der ersten Bahn (46, 47) zugeordnete Ausgleichsbefülllinie (36 - 39) mit einer Gutportion befüllt wird.

11. Vorrichtung zur Bildung von Portionen aus faserigem Gut, insbesondere Tabak, und zum Abtransport derselben durch einen (Endlos-)Förderer (15), insbesondere zur Durchführung des Verfahrens gemäß Anspruch 1, wobei der Förderer (15) mindestens eine Bahn (46, 47) aufweist mit mittels Befülllinien (36 - 39) einer oder mehrerer Befüllstationen (11, 12) befüllbaren Aufnahmen (14) für je eine Portion, insbesondere eine Becherkette, und wobei die Vorrichtung über mindestens eine Wägeeinrichtung (23) verfügt, mit der vor den einzelnen Befüllvorgängen einzelne Portionen des Füllgutes abwiegbar sind, wobei die abgewogenen Portionen, die vorbestimmten Bedingungen entsprechen - Gutportionen -, taktweise den Befülllinien (36 - 39) zuführbar sind, und wobei abgewogene Portionen, die den vorbestimmten Bedingungen nicht entsprechen, detektierbar und als Fehlportionen ausschleusbar sind, **gekennzeichnet durch** eine Steuer- und/oder Regeleinrichtung, die derart ausgebildet ist, dass bei Detektion einer Fehlportion in der Wägeeinrichtung (23) diejenige Aufnahme (14) der Förderbahn erfassbar ist, den die ursprünglich zur Befüllung dieser Aufnahme (14) vorbestimmte Befülllinie (36 - 39) mit der Füllgutportion, auf der die Fehlportion basiert, befüllt hätte, hätte die Füllgutportion den vorbestimmten Bedingungen entsprochen - Fehlportionsaufnahme -, und dass eine andere als die ursprünglich für die Befüllung der Fehlportionsaufnahme vorbestimmte Befülllinie (36 - 39) - Ausgleichsbefülllinie - vorzugsweise außerhalb deren eigentlichen Befülltaktes mit einer den vorbestimmten Bedingungen entsprechenden Gutportion befüllbar ist.

12. Vorrichtung gemäß Anspruch 11, **dadurch gekennzeichnet, dass** der Förderer (15) mehrere Aufnahmebahnen (46, 47) aufweist, wobei mehrere, vorzugsweise zwei, von unterschiedlichen Bahnen (46, 47) zugeordneten Befülllinien (36 - 39), vorzugsweise oberhalb der Bahnen (46, 47) angeordnete Befüllschächte, funktional an eine gemeinsame Zuführung (34, 35) angeschlossen sind, insbesondere einen Zuführschacht, über die jeder der angeschlossenen Befülllinien (36 - 39) bereits abgewogene Gutportionen zuführbar sind.

13. Vorrichtung gemäß Anspruch 11 oder 12, **dadurch gekennzeichnet, dass** die Befüllungsstation (11, 12), vorzugsweise die gemeinsame Zuführung (34, 35), zur bedarfsabhängigen Verteilung der Gutportionen an die Befülllinien (36 - 39) über ein Verteilerorgan (40, 41) verfügt, insbesondere ein als Zellenrad ausgebildetes Verteilerorgan (40, 41), mit dem die Gutportionen den einzelnen, funktional an die gemeinsame Zuführung (34, 35) angeschlossenen Befülllinien (36 - 39) bedarfsweise zuförderbar sind.

14. Vorrichtung gemäß einem oder mehreren der vorhergehenden Ansprüchen, **dadurch gekennzeichnet, dass** die Wägeeinrichtung (23) mindestens ein Wiegeorgan (21, 22) mit mehreren Zellen aufweist, in dem das Füllgut wiegbar ist, und dass das Wiegeorgan (21, 22) funktional derart mit der gemeinsamen Zuführung der Befülllinien (36 - 39) zusammenwirkt, dass Gutportionen durch Rotation des Wiegeorgans (21, 22) in einer ersten Drehrichtung über die gemeinsame Zuführung (34, 35) dem Verteilerorgan (40, 41) zuförderbar sind.

15. Vorrichtung gemäß Anspruch 14, **dadurch gekennzeichnet, dass** durch eine Rotation des Wiegerorgans (21, 22) in der entgegengesetzten Drehrichtung die Ausschleusung einer Fehlportion (50, 66), vorzugsweise in eine Ausschleuserinne (48) bewirkbar ist.

## Claims

1. Method of forming portions of fibrous material, in particular tobacco, and of removing the same by an (endless) conveyor (15) having at least one path of holders (14) for a respective portion, it being the case that the holders (14) are filled with individual portions of the contents at at least two filling lines (36-39) of one or more filling stations (11, 12), and that, prior to the individual filling operations, individual portions of the contents are weighed and weighed portions which satisfy the predetermined conditions - acceptable portions - are filled cyclically into the holders (14) and weighed portions which do not satisfy the predetermined conditions are detected and ejected as defective portions, **characterized by** the following steps:
a) following detection of a defective portion, that holder (14) which the filling line (36-39) originally predetermined for filling this holder (14) would have filled with the contents portion, on which the defective portion is based, had the contents portion satisfied the predetermined conditions - defective-portion holder - is sensed,
b) a filling line (36-39) other than that originally predetermined for filling the defective-portion holder - compensating filling line - fills the defective-portion holder, preferably outside the original filling cycle thereof, with an acceptable portion which satisfies the predetermined conditions.

2. Method according to Claim 1, **characterized in that** the defective-portion holder is sensed by the position of the defective-portion holder within the path (46, 47) of holders (14) and/or relative to the positions of the filling lines being determined, in particular calculated, by means of suitable control and/or regulating algorithms, preferably immediately following detection of the defective portion by means of a weighing arrangement (23).

3. Method according to Claim 2, **characterized in that** the position of the sensed defective-portion holder is tracked during the conveying movement thereof, at feast until the defective-portion holder is filled by the compensating filling line.

4. Method according to one or more of the preceding claims, **characterized in that** the compensating filling line (36-39) fills the defective-portion holder immediately after a holder (14) which immediately precedes the defective-portion holder, as seen in the conveying direction of the conveyor (15), is filled in a correctly timed manner, that is to say in accordance in a the original filling cycle of the compensating filling line (36-39).

5. Method according to one or more of the preceding claims, **characterized in that** the defective-portion holder is filled by a compensating filling line (36-39) which is arranged downstream, as seen in the conveying direction, of the filling line (36-39) which is originally predetermined for filling the holder (14).

6. Method according to one or more of the preceding claims, **characterized in that** the defective-portion holder is filled by a compensating filling line (36-39) which is arranged upstream, as seen in the conveying direction, of the filling line (36-39) which is originally predetermined for filling the holder (14).

7. Method according to one or more of the preceding claims, **characterized in that** following weighing, but prior to a holder (14) being filled, one or more acceptable portions are stored on an interim basis for a certain period of time in at least one store for accommodating contents portions, in particular a distributor mechanism (40, 41) designed as a cell wheel.

8. Method according to one or more of the preceding claims, **characterized in that** the correctly timed filling operations at the individual filling lines (36, 38; 37, 39), which are arranged one behind the other as seen in the conveying direction, take place simultaneously in each case.

9. Method according to Claim 8, **characterized in that** a filling line (36-39) assigned to a first holder path (46, 47) fills the holders (14) of this conveying path (46, 47) in a correctly timed manner, and **in that** a filling line (36-39) assigned to a second holder path (46, 47). in particular parallel to the first path, serves as a compensating filling line for the second holder path (46, 47) by filling defective-portion holders of this second path as required, the weighed acceptable portions being fed to the two filling lines individually by means of a common distributor mechanism (40, 41) which feeds the weighed acceptable portions, as required, to one filling line (36-39) or the other.

10. Method according to Claim 9, **characterized in that** a holder (14) without contents, which is possibly brought about within the first path (46, 47) by the compensating filling operation of the defective-portion holder of the second path (46, 47), is sensed and filled with an acceptable portion by a further, downstream or upstream compensating filling line (36-39) assigned to the first path (46, 47).

11. Apparatus for forming portions of fibrous material, in particular tobacco, and for removing the same by an (endless) conveyor (15), in particular for implementing the method according to Claim 1, it being the case that the conveyor (15) has at least one path (46, 47) with holders (14) which can be filled by means of filling lines (36-39) of one or more filling stations (11, 12) and are intended for a respective portion, in particular a bucket chain, and that the apparatus has at least one weighing arrangement (23) by means of which, prior to the individual filling operations, individual portions of the contents can be weighed, it being possible for the weighed portions which satisfy the predetermined conditions - acceptable portions - to be fed cyclically to the filling lines (36-39), and for weighed portions which do not satisfy the predetermined conditions to be detected and ejected as defective portions, **characterized by** a control and/or regulating arrangement which is designed such that. upon detection of a defective portion in the weighing arrangement (23), that holder (14) of the conveying path which the filling line (36-39) originally predetermined for filling this holder (14) would have filled with the contents portion, on which the defective portion is based, had the contents portion satisfied the predetermined conditions - defective-portion holder - can be sensed, and that a filling line (36-39) other than that originally predetermined for filling the defective-portion holder - compensating filling line - can be filled, preferably outside the actual filling cycle thereof, with an acceptable portion which satisfies the predetermined conditions.

12. Apparatus according to Claim 11, **characterized in that** the conveyor (15) has a plurality of holder paths (46, 47), it being the case that a plurality of, preferably two, filling lines (36-39) assigned to different paths (46, 47), preferably filling shafts arranged above the paths (46, 47), are connected functionally to a common feeder (34, 35), in particular a feed shaft, via which already weighed acceptable portions can be fed to each of the connected filling lines (36-39).

13. Apparatus according to Claim 11 or 12, **characterized in that,** for the purpose of distributing the acceptable portions to the filling lines (36-39) as required, the filling station (11, 12), preferably the common feeder (34, 35), has a distributor mechanism (40, 41), in particular a distributor mechanism (40, 41) designed as a cell wheel, by means of which the acceptable portions can be conveyed, as required, to the individual filling lines (36-39) which are connected functionally to the common feeder (34, 35).

14. Apparatus according to one or more of the preceding claims, **characterized in that** the weighing arrangement (23) has at least one weighing mechanism (21, 22) which has a plurality of cells and in which the contents can be weighed, and **in that** the weighing mechanism (21, 22) interacts functionally with the common feeder of the filling lines (36-39) such that, by virtue of the weighing mechanism (21, 22) being rotated in a first direction of rotation, acceptable portions can be conveyed to the distributor mechanism (40, 41) via the common feeder (34, 35).

15. Apparatus according to Claim 14, **characterized in that,** by virtue of the weighing mechanism (21, 22) being rotated in the opposite direction of rotation, a defective portion (50, 66) can be ejected, preferably into an ejecting channel (48).

## Revendications

1. Procédé pour la formation de portions de matière fibreuse, en particulier de tabac, et pour l'évacuation de celles-ci par un convoyeur (sans fin) (15) avec au moins une voie de logements (14) destinés chacun à une portion, dans lequel les logements (14) sont remplis sur au moins deux lignes de remplissage (36 - 39) d'une ou de plusieurs station(s) de remplissage (11, 12) avec des portions individuelles de la matière de remplissage, et dans lequel avant les opérations de remplissage individuelles on pèse des portions individuelles de la matière de remplissage et on charge des portions pesées, qui correspondent à des conditions prédéterminées - des portions de matière - en cadence dans les logements (14) et on détecte des portions pesées, qui ne correspondent pas aux conditions prédéterminées, et on les expulse en tant que portions défectueuses, **caractérisé par** les opérations suivantes:
a) après la détection d'une portion défectueuse, on détecte le logement (14) que la ligne de remplissage (36 - 39) prédéterminée initialement pour le remplissage de ce logement (14) aurait rempli avec la portion de matière de remplissage, sur laquelle la portion défectueuse est basée, si la portion de matière de remplissage avait correspondu aux conditions prédéterminées - logement de portion défectueuse,
b) une ligne de remplissage (36 - 39) autre que la ligne de remplissage prédéterminée initialement pour le remplissage du logement de portion défectueuse - ligne de remplissage de compensation - remplit le logement de portion défectueuse, de préférence à l'extérieur de sa cadence de remplissage initiale, avec une portion de matière correspondant aux conditions prédéterminées.

2. Procédé selon la revendication 1, **caractérisé en ce que** l'on effectue la détection du logement de portion défectueuse, par le fait que l'on détermine la position du logement de portion défectueuse à l'intérieur de la voie (46, 47) de logements (14) et/ou par rapport aux positions des lignes de remplissage au moyen d'algorithmes de commande et/ou de régulation appropriés, en particulier on la calcule immédiatement après la détection de la portion défectueuse au moyen d'un dispositif de pesage (23).

3. Procédé selon la revendication 2, **caractérisé en ce que** l'on suit la position du logement de portion défectueuse détecté pendant son mouvement de transport, au moins jusqu'au remplissage du logement de portion défectueuse par la ligne de remplissage de compensation.

4. Procédé selon une ou plusieurs des revendications précédentes, **caractérisé en ce que** la ligne de remplissage de compensation (36 - 39) remplit le logement de portion défectueuse immédiatement après un remplissage cadencé, à savoir correspondant à la cadence de remplissage initiale de la ligne de remplissage de compensation (36 - 39), d'un logement (14) précédant immédiatement le logement de portion défectueuse dans la direction de transport du convoyeur (15) .

5. Procédé selon une ou plusieurs des revendications précédentes, **caractérisé en ce que** l'on remplit le logement de portion défectueuse au moyen d'une ligne de remplissage de compensation (36 - 39), qui est disposée dans la direction de transport en aval de la ligne de remplissage (36 - 39) prédéterminée initialement pour le remplissage du logement (14).

6. Procédé selon une ou plusieurs des revendications précédentes, **caractérisé en ce que** l'on remplit le logement de portion défectueuse au moyen d'une ligne de remplissage de compensation (36 - 39), qui est disposée dans la direction de transport en amont de la ligne de remplissage (36 - 39) prédéterminée initialement pour le remplissage du logement (14).

7. Procédé selon une ou plusieurs des revendications précédentes, **caractérisé en ce que** l'on retient provisoirement une ou plusieurs portion(s) de matière après le pesage, cependant avant le remplissage d'un logement (14), pendant une durée prédéterminée dans un accumulateur destiné à contenir des portions de matière de remplissage, en particulier dans un organe de distribution (40, 41) réalisé sous forme de roue cellulaire.

8. Procédé selon une ou plusieurs des revendications précédentes, **caractérisé en ce que** les opérations de remplissage cadencées sont respectivement effectuées simultanément sur les lignes de remplissage individuelles (36, 38; 37, 39) disposées l'une derrière l'autre dans la direction de transport.

9. Procédé selon la revendication 8, **caractérisé en ce qu'**une ligne de remplissage (36 - 39) associée à une première voie de logements (46, 47) remplit en cadence les logements (14) de cette voie de transport (46, 47) et **en ce qu'**une ligne de remplissage (36 - 39) associée à une deuxième voie de logements (46, 47), en particulier parallèle à la première voie, sert de ligne de remplissage de compensation de la deuxième voie de logements (46, 47), par le fait qu'elle remplit à la demande des logements de portion défectueuse de cette deuxième voie, dans lequel on envoie les portions de matière pesées aux deux lignes de remplissage individuellement au moyen d'un organe de distribution commun (40, 41), qui envoie les portions de matière pesées selon la demande à une ou à l'autre ligne de remplissage (36 - 39).

10. Procédé selon la revendication 9, **caractérisé en ce que** l'on détecte un logement (14) sans matière de remplissage éventuellement traité par le remplissage de compensation du logement de portion défectueuse de la deuxième voie (46, 47) à l'intérieur de la première voie (46, 47) et on le remplit avec une portion de matière par une autre ligne de remplissage de compensation (36 - 39) disposée en aval ou en amont, associée à la première voie (46, 47).

11. Dispositif pour la formation de portions de matière fibreuse, en particulier de tabac, et pour l'évacuation de celles-ci au moyen d'un convoyeur (sans fin) (15), en particulier pour la mise en oeuvre du procédé selon la revendication 1, dans lequel le convoyeur (15) présente au moins une voie (46, 47) avec des logements (14) destinés chacun à une portion, qui peuvent être remplis au moyen de lignes de remplissage (36 - 39) d'une ou de plusieurs station(s) de remplissage (11, 12), en particulier une chaîne de gobelets, et dans lequel le dispositif est muni d'au moins un dispositif de pesage (23), avec lequel des portions de la matière de remplissage peuvent être pesées avant les opérations de remplissage individuelles, dans lequel les portions pesées, qui correspondent à des conditions prédéterminées - portions de matière - peuvent être envoyées en cadence aux lignes de remplissage (36 - 39), et dans lequel des portions pesées, qui ne correspondent pas aux conditions prédéterminées, peuvent être détectées et expulsées comme portions défectueuses, **caractérisé par** un dispositif de commande et/ou de régulation, qui est configuré de telle manière que lors de la détection d'une portion défectueuse dans le dispositif de pesage (23), il puisse détecter le logement (14) de la voie de transport que la ligne de remplissage (36 - 39) prédéterminée initialement pour le remplissage de ce logement (14) avec la portion de matière de remplissage, sur laquelle la portion défectueuse est basée, aurait rempli si la portion de matière de remplissage avait correspondu aux conditions prédéterminées - logement de portion défectueuse - et qu'une ligne de remplissage (36 - 39) autre que la ligne de remplissage prédéterminée initialement pour le remplissage du logement de portion défectueuse - ligne de remplissage de compensation - puisse être remplie, de préférence à l'extérieur de la cadence de remplissage propre, avec une portion de matière correspondant aux conditions prédéterminées.

12. Dispositif selon la revendication 11, **caractérisé en ce que** le convoyeur (15) présente plusieurs voies de logement (46, 47), dans lequel plusieurs, de préférence deux, lignes de remplissage (36 - 39) associées à des voies différentes (46, 47), de préférence des puits de remplissage disposés au-dessus des voies (46, 47), sont raccordées fonctionnellement à une alimentation commune (34, 35), en particulier un puits d'alimentation, par laquelle des portions de matière déjà pesées peuvent être envoyées à chacune des lignes de remplissage raccordées (36 - 39).

13. Dispositif selon la revendication 11 ou 12, **caractérisé en ce que** la station de remplissage (11, 12), de préférence l'alimentation commune (34, 35), est munie, pour la distribution à la demande des portions de matière aux lignes de remplissage (36 - 39), d'un organe de distribution (40, 41), en particulier un organe de distribution (40, 41) réalisé sous forme de roue cellulaire, avec lequel les portions de matière peuvent être envoyées à la demande aux lignes de remplissage individuelles fonctionnellement raccordées à l'alimentation commune (34, 35).

14. Dispositif selon une ou plusieurs des revendications précédentes, **caractérisé en ce que** le dispositif de pesage (23) présente au moins un organe de pesage (21, 22) avec plusieurs cellules, dans lequel la matière de remplissage peut être pesée, et **en ce que** l'organe de pesage (21, 22) coopère fonctionnellement avec l'alimentation commune des lignes de pesage (36 - 39) de telle manière que des portions de matière puissent être envoyées par rotation de l'organe de pesage (21, 22) dans un premier sens de rotation à l'organe de distribution (40, 41) via l'alimentation commune (34, 35).

15. Dispositif selon la revendication 14, **caractérisé en ce que** l'expulsion d'une portion défectueuse (50, 66), de préférence dans une goulotte d'expulsion (48), peut être provoquée par une rotation de l'organe de pesage (21, 22) dans le sens de rotation opposé.
